# EUROPÄISCHE PATENTSCHRIFT

(11) **EP 3 455 038 B1**
(45) Veröffentlichungstag und Bekanntmachung des Hinweises auf die Patenterteilung: **27.04.2022**
(21) Anmeldenummer: 17723366.5
(22) Anmeldetag: 12.05.2017
(51) Int. Cl.: B26D 1/10, B26D 3/00, B26D 1/00

(54) **VERFAHREN ZUM TRENNEN EINES TROCKENEN FASERVERBUNDGELEGES, INSBESONDERE FÜR EINE WINDENERGIEANLAGE**
A METHOD FOR CUTTING A DRY FIBERREINFORCED PRODUCT, PARTICULARLY FOR THE PRODUCTION OF A WIND ENERGY DEVICE
PROCÉDÉ POUR LA DÉCOUPE DES PROCUITS SECS RENFORCÉES PAR DE FIBRES, EN PARTICULIER POUR LA PRODUCTION D'UN DISPOSITIF POUR LA PRODUCTION DE ENERGIE ÉOLIQUE

(30) Priorität: 12.05.2016 DE 102016108785
(43) Veröffentlichungstag der Anmeldung: 20.03.2019
(73) Patentinhaber: Wobben Properties GmbH, 26607 Aurich (DE)
(72) Erfinder: GRAVEMANN, Andrea, 26725 Emden (DE); WESTRUP, Harald, 33142 Büren (DE)
(74) Vertreter: Eisenführ Speiser
(86) Internationale Anmeldenummer: PCT/EP2017/061442
(87) Internationale Veröffentlichungsnummer: WO 2017/194731

(56) Entgegenhaltungen:
- DE-B3-102012 219 224
- JP-A- 2009 255 283
- JP-A- 2010 260 163

## Beschreibung

Die Erfindung betrifft ein Verfahren zum Trennen eines trockenen Faserverbundgeleges, z.B. für eine Windenergieanlage. Gattungsgebend ist die JP 2009 255 283 A. Faserverbundgelege sind in der Regel ein Vorprodukt zur Herstellung von Faserverbundbauteilen. Die Faserverbundgelege werden in der Regel in einem weiteren Herstellungsprozess mit einem Matrixmaterial, beispielsweise einem Epoxidharz, getränkt und zu Faserverbundbauteilen weiterverarbeitet. Faserverbundgelege umfassen im Wesentlichen Fasern, welche beispielsweise Glasfasern und/oder Aramidfasern und/oder Kohlefasern sein können. Die Fasern können vorzugsweise als Gelegelagen bereitgestellt werden. Gelegelagen weisen eine flächige Erstreckung auf und eine orthogonal zu dieser eine sehr geringe Dicke. Darüber hinaus umfassen Faserverbundgelege häufig ein Bindemittel, der die Fasern und/oder die Gelegelagen in einer definierten Anordnung zusammenhalten. Faserverbundgelege umfassen darüber hinaus vorzugsweise eine Vielzahl an übereinander angeordneten Gelegelagen, so dass die Dicke eines Faserverbundgeleges die Dicke einer Faser bzw. einer Gelegelage um ein Vielfaches übersteigt.

Trockene Faserverbundgelege umfassen Fasern, die vorzugsweise als Gelegelagen in das Faserverbundgelege eingebracht sind, und vorzugsweise ein Bindemittel, das beispielsweise ein Kunstharz, insbesondere ein Epoxidharz, ist oder dieses umfasst. Das Bindemittel kann auch bereits das Matrixmaterial sein bzw. dieses umfassen, wobei der Anteil an Bindemittel in trockenen Faserverbundgelegen vorzugsweise geringer ist als der Anteil an Matrixmaterial in vorimprägnierten Halbzeugen oder fertigen Faserverbundbauteilen. Vorzugsweise hat das Bindemittel noch nicht oder lediglich in geringem Maße mit weiteren Bestandteilen reagiert, so dass das Bindemittel vorzugsweise in einem nicht oder zumindest gering gehärteten Zustand im trockenen Faserverbundgelege vorliegt. Die Gelegelagen im Faserverbundgelege können ferner beispielsweise mit einem Klebstoff und/oder anderen haftenden Materialien miteinander verbunden sein, so dass die Position der Gelegelagen zueinander im Faserverbundgelege im Wesentlichen auch bei Bewegungen des Faserverbundgeleges beibehalten wird. Das Vorhandensein von Bindemitteln und/oder anderen haftenden Materialien ist jedoch keine Notwendigkeit.

Im Gegensatz zu trockenen Faserverbundgelegen umfassen vorimprägnierte Faserverbundgelege in der Regel bereits zumindest einen Großteil an Matrixmaterial. Derartige Halbzeuge werden beispielsweise auch als vorimprägnierte Fasern bezeichnet, woraus sich auch der Begriff des Prepreg ableitet. Prepregs zeichnen sich daher insbesondere dadurch aus, dass diese im Wesentlichen eine komplette Matrix umfassen, wobei die Matrix noch nicht oder lediglich in geringem Maße reagiert hat. Das heißt insbesondere, dass die Matrix noch nicht bzw. noch nicht vollständig ausgehärtet ist und mit einem weiteren Element durch gemeinsames Reagieren bzw. Aushärten verbunden werden kann.

Wenn im Folgenden ein Faserverbundgelege erwähnt wird, ist, wenn nicht explizit anders vermerkt, ein trockenes Faserverbundgelege beschrieben. Zur Fertigstellung eines Faserverbundmaterials wird in das trockene Faserverbundgelege ein Matrixmaterial eingebracht, vorzugsweise im Infusionsverfahren. Bei der Infusion wird ein trockenes Faserverbundgelege angeordnet, mit einer Folie abgedichtet und danach ein Vakuum innerhalb des Faserverbundgeleges erzeugt. Das Matrixmaterial gelangt im Anschluss über eine Zuleitung durch den Unterdruck im Faserverbundgelege in dieses hinein und verteilt sich durch das Vakuum äußerst homogen.

Trockene Faserverbundgelege können beispielsweise durch das Abrollen eines Vorproduktes, beispielsweise von Gelegelagen, auf einen Kern hergestellt werden.

Dadurch kann eine beliebige Höhe bzw. Dicke des Faserverbundgeleges erreicht werden. Darüber hinaus kann das Faserverbundgelege in dieser Form bereits die Geometrie des herzustellenden Bauteils aufweisen. Eine Höhe bzw. Dicke des Faserverbundgeleges wird hier insbesondere als Erstreckung des Faserverbundgeleges orthogonal zu einer flächigen Erstreckung des Faserverbundgeleges verstanden. Wenn das Faserverbundgelege beispielsweise röhrenförmig, insbesondere mit kreisförmigem oder elliptischem Querschnitt, bereitgestellt wird, erstreckt sich die Höhe bzw. Dicke des Faserverbundgeleges vorzugsweise in einer radialen Richtung.

Derartige Faserverbundgelege zeichnen sich insbesondere dadurch aus, dass diese eine Vielzahl an nebeneinander und/oder übereinander angeordneter Fasern aufweisen. Durch die hohe Festigkeit der in dem Faserverbundgelege enthaltenen Fasern zeichnet sich ein derartiges Faserverbundgelege in der Regel durch eine äußerst ungünstige Trennbarkeit aus. Insbesondere das Schneiden und/oder Sägen eines derartigen Faserverbundgeleges ist mit besonderen Herausforderungen verbunden.

Obwohl in der Praxis meist versucht wird, das Trennen, insbesondere das Schneiden und/oder Sägen, von derartigen Faserverbundgelegen zu vermeiden, beispielsweise durch eine entsprechende Anordnung der Fasern, wird dieses in der Regel bei Bedarf mit konventionellen Verfahren getrennt. Beispielsweise erfolgt das Trennen mit einem Winkelschleifer.

Neben oft (zu) großen Toleranzen und einer niedrigen Qualität der Schnittflächen, beispielsweise durch Ausfransen und/oder Verschmelzen und/oder Verfärben der Fasern, zeichnet sich das Trennen mittels konventioneller Verfahren ferner dadurch aus, dass diese personalintensiv und darüber hinaus zeitaufwendig sind, so dass neben einer niedrigen Qualität hohe Kosten vorliegen. Ferner erschweren ausgefranste Schnittkanten und/oder verschmolzene Fasern eine im Anschluss durchzuführende Infusion. Unter anderem die gewünschte homogene Verteilung kann beispielsweise durch ausgefranste Schnittkanten oder verschmolzene Fasern behindert werden.

Das Deutsche Patent- und Markenamt hat in der Prioritätsanmeldung folgenden Stand der Technik recherchiert: DE 34 46 899 C1, DE 37 00 250 A1, DE 10 2014 207 785 A1, US 3 790 071 A, US 4 779 498 A und JP H07-164 378 A. Es ist daher eine Aufgabe der vorliegenden Erfindung ein Verfahren zum Trennen eines trockenen Faserverbundgeleges bereitzustellen welche ein oder mehrere der genannten Nachteile vermindern oder beseitigen. Es ist insbesondere eine Aufgabe der vorliegenden Erfindung, ein Verfahren zum Trennen eines trockenen Faserverbundgeleges bereitzustellen, welche eine bessere Qualität der Schnittflächen ermöglichen und/oder die Kosten des Trennens reduzieren.

Die Aufgabe wird gelöst durch ein Verfahren zum Trennen eines trockenen Faserverbundgeleges mit einer Vielzahl übereinander angeordneter Gelegelagen nach Anspruch 1. Weder eine Verwendung einer Trennvorrichtung noch eine Windenergieanlage werden beansprucht.

In den Gelegelagen können die Fasern parallel und/oder mit einem Winkel zueinander und/oder auch als Multiaxialgelege angeordnet sein. Die in den Gelegelagen enthaltenen Fasern können beispielweise organische Fasern und/oder anorganische Fasern und/oder Naturfasern umfassen. Anorganische Fasern sind beispielsweise Glasfasern, Basaltfasern, Borfasern, Keramikfasern oder Stahlfasern. Organische Fasern sind beispielsweise Aramidfasern, Kohlenstofffasern, Polyesterfasern oder Polyethylenfasern, insbesondere Hochleistungs-Polyethylenfasern, wie beispielsweise Dyneemafasern. Als Naturfasern kommen beispielsweise Hanffasern, Flachsfasern oder Sisalfasern zum Einsatz. Die Faserverbundgelege umfassen vorzugsweise Endlosfasern und/oder Langfasern und/oder Kurzfasern. Faserverbundgelege und insbesondere trockene Faserverbundgelege werden beispielsweise für die Herstellung von Komponenten von Windenergieanlagen verwendet.

Der Erfindung liegt die Erkenntnis zugrunde, dass trockene Faserverbundgelege mit einem translatorisch bewegten Trennelement, beispielsweise einem Messer und/oder einem Sägeblatt, insbesondere dadurch eine ungünstige Trennbarkeit aufweisen, da die Fasern im Gelege nicht vollständig örtlich fixiert sind und daher Bewegungen ausführen können. Das Trennen mittels eines translatorisch bewegten Trennelements beruht unter anderem darauf, dass zwischen dem Trennelement und dem zu trennenden Element eine Relativbewegung erfolgt. Eine Bewegung der Fasern im trockenen Faserverbundgelege während des Trennvorgangs reduziert oder vermeidet eine Relativbewegung zwischen Trennelement und Fasern. Dieser Effekt wird verstärkt je mehr Gelegelagen übereinander angeordnet sind, sprich je größer die Abmessung der Höhe des Faserverbundgeleges ist. Die Höhe ist in diesem Zusammenhang insbesondere in Richtung des Hubs ausgerichtet, so dass die Höhe und/oder der Hub vorzugsweise orthogonal zu einer flächigen Erstreckung des Faserverbundgeleges ausgerichtet sind. Die Herausforderung beim Trennen eines trockenen Faserverbundgeleges ist es, einen sauberen handhabbaren Schnitt zu erzielen. Dies bedeutet insbesondere, dass die Schnittkanten wenig oder nicht ausgefranst und/oder verklebt und/oder verfärbt sind, so dass im Anschluss eine einwandfreie oder zumindest verbesserte Infusion möglich ist.

Das Trennen und/oder Schneiden und/oder Sägen von Faserverbundgelegen umfasst insbesondere das Brechen von im Faserverbundgelege angeordneten Fasern.

Neben dem Bereitstellen des im Vorherigen genannten trockenen Faserverbundgeleges wird eine Trennvorrichtung bereitgestellt. Die Trennvorrichtung ist dahingehend ausgebildet, dass diese das Trennelement im Wesentlichen in einer translatorischen Bewegung bewegen kann. Ferner ist die Trennvorrichtung vorzugsweise ausgebildet einen ausreichenden Hub bereitzustellen, so dass der von der Trennvorrichtung bereitgestellte Hub größer ist als der Zahnspitzenabstand von zwei benachbarten Zähnen der Verzahnung. Ferner ist die Trennvorrichtung vorzugsweise derart ausgebildet, dass diese das Trennen eines Faserverbundgeleges mit einer definierten Höhe ermöglicht indem die Trennvorrichtung eine geeignete Schnitthöhe, beispielsweise von mindestens 150mm, insbesondere von mindestens 180mm oder von mindestens 200mm aufweist. Die Schnitthöhe ist hier die maximale Höhe eines Schnittgegenstands, beispielsweise eines Faserverbundgeleges, das von der Trennvorrichtung getrennt werden kann. Ferner beispielsweise weist das Faserverbundgelege eine Höhe von größer 30mm, größer 50mm, größer 75mm oder größer 90mm auf.

Das im Wesentlichen translatorische Bewegen wird hier verstanden als eine translatorische Relativbewegung zwischen Trennelement und dem zu trennenden trockenen Faserverbundgelege, insbesondere in einer Bewegungsrichtung im Wesentlichen orthogonal zu der flächigen Erstreckung des Faserverbundgeleges. Ferner wird das im Wesentlichen translatorische Bewegen hier verstanden als oszillierende Bewegung, insbesondere als Auf- und Abbewegung. Vorzugsweise wird das Trennelement, insbesondere ein distales Ende des Trennelements, zwischen einem oberen Umkehrpunkt und einem unteren Umkehrpunkt in Richtung der Bewegungsrichtung geführt. In den Umkehrpunkten weist das Trennelement vorzugsweise jeweils eine Geschwindigkeit in seiner Bewegungsrichtung von null auf. Zwischen dem oberen Umkehrpunkt und dem unteren Umkehrpunkt ist eine Entfernung, die vorzugsweise dem Hub entspricht.

Das Trennen stellt insbesondere eine Kombination aus einer Schnittbewegung und einer Vorschubbewegung dar. Sowohl bei der Schnittbewegung als auch bei der Vorschubbewegung bewegen sich das Trennelement und das trockene Faserverbundgelege relativ zueinander. Vorzugsweise bewegt sich das Trennelement in einer Bewegungsrichtung während sich die Trennvorrichtung in einer Bewegungsrichtung durch das Faserverbundgelege bewegt. Die Vorschubrichtung kann auch bereitgestellt werden, indem das Faserverbundgelege in eine Richtung bewegt wird, die entgegengesetzt zu der Vorschubrichtung ausgerichtet ist. Vorzugsweise sind Bewegungsrichtung und Vorschubrichtung im Wesentlichen orthogonal zueinander ausgerichtet.

Vorzugsweise umfasst ein im Wesentlichen translatorisches Bewegen eine translatorische Schnittbewegung und ferner vorzugsweise auch im Wesentlichen eine translatorische Vorschubbewegung. Die Schnittbewegung erfolgt vorzugsweise im Wesentlichen parallel zur Höhe des zu trennenden Faserverbundgeleges. Die Vorschubbewegung erfolgt vorzugsweise im Wesentlichen parallel zur flächigen Erstreckung des zu trennenden Faserverbundgeleges.

Insbesondere handelt es sich beim Trennen mit einer im Wesentlichen translatorischen Bewegung um eine diskontinuierliche translatorische Bewegung, insbesondere eine diskontinuierliche translatorische Schnittbewegung, beispielsweise in Form einer Auf- und Abbewegung, und vorzugsweise nicht um eine kontinuierliche Bewegung, insbesondere nicht um eine kontinuierliche Bewegung, wie sie beispielsweise an einer Ketten- und/oder Bandsäge auftritt. Vorzugsweise handelt es sich bei einer im Wesentlichen translatorischen Vorschubbewegung um eine im Wesentlichen kontinuierliche Bewegung. Vorzugsweise ist ein Vorschubrichtungswinkel im Hub im Wesentlichen über der Schnitthöhe konstant, insbesondere im Gegensatz zu einer kreisförmigen Schnittbewegung beispielsweise einer Ketten- und/oder Bandsäge, wo der Vorschubrichtungswinkel über die Schnitthöhe unterschiedlich ist.

Eine im wesentlichen orthogonale Ausrichtung des Trennelementes zu der flächigen Erstreckung des Faserverbundgeleges und/oder eine im Wesentlichen translatorische Schnittbewegung im Wesentlichen parallel zur Höhe des zu trennenden Faserverbundgeleges und/oder eine im Wesentlichen translatorische Vorschubbewegung im Wesentlichen parallel zur flächigen Erstreckung des zu trennenden Faserverbundgeleges umfasst beim Trennen vorzugsweise auch ein temporäres relatives Verkippen des trockenen Faserverbundgeleges und des Trennelementes zueinander. Das Trennen erfolgt erfindungsgemäß mit einem Trennelement, das eine Verzahnung mit einem Wellenprofil aufweist. Das Trennelement weist vorzugsweise eine flächige Erstreckung zwischen einem proximalen und einem distalen Ende auf und orthogonal zu der flächigen Erstreckung eine Dicke. Somit weist das Trennelement vorzugsweise zwei Kanten auf, die parallel zu einer Längserstreckung vom proximalen zum distalen Ende verlaufen. Die Beabstandung der zwei Kanten ist die Breite des Trennelements. Die flächige Erstreckung wird demnach vorzugsweise durch die Längserstreckung und die Breite gebildet. An mindestens einer dieser Kanten ist vorzugsweise die Verzahnung angeordnet. Vom proximalen zum distalen Ende weist das Trennelement ferner eine Längsachse auf, die orthogonal zur Dicke und zur Breite verläuft.

Die Verzahnung weist ein Wellenprofil mit einer Mehrzahl von Zähnen auf, so dass ein Zahn teilweise oder vollständig die Geometrie eines halben Kreises oder einer halben Ellipse aufweist. Die Zähne weisen eine Zahnspitze auf, die der Längsachse des Trennelements abgewandt ist. Gegenüberliegend von der Zahnspitze weist ein Zahn einen Zahnfuß auf, der der Längsachse des Trennelements zugewandt ist. Ein Zahn erstreckt sich von seinem Zahnfuß zu seiner Zahnspitze.

Mit dem Zahnfuß ist ein Zahn an einer Zahnfußlinie angeordnet. Unterschiedliche Ausführungsvarianten sind für die Zahnfußlinie, insbesondere in Bezug auf die Geometrie entlang der Kante des Trennelements, möglich. In der einfachsten Ausführungsvariante der Zahnfußlinie kann diese als eine Gerade ausgebildet sein, welche parallel zur Längsachse des Trennelements angeordnet ist. Die Zähne sind dann in Bezug auf die Längsachse des Trennelements nebeneinander angeordnet. Ferner kann die gerade Zahnfußlinie um eine Achse parallel zur Dicke des Trennelements gekippt sein. Ferner kann die Zahnfußlinie Kurven aufweisen, wobei insbesondere ein sinusförmiger Verlauf der Zahnfußlinie bevorzugt ist, so dass auch die Zahnfußlinie einen wellenartigen Verlauf annehmen kann. Vorzugsweise können die Hochpunkte des sinusförmigen Verlaufs mit einer Geraden verbunden werden, die im Wesentlichen parallel zur Längserstreckung des Trennelements verläuft. Der wellenförmige Verlauf der Zahnfußlinie erfolgt vorzugsweise in einer Ebene die sich flächenparallel zur flächigen Erstreckung des Trennelements erstreckt. Die von der Zahnfußlinie ausgebildeten Wellen sind vorzugsweise nicht als Zähne ausgebildet und weisen daher auch keine Zahnspitzen auf. Somit ist zwischen zwei benachbarten Wellen der Zahnfußlinie auch kein Zahnspitzenabstand zu ermitteln.

Die Zahnspitze ist die Stelle eines Zahns, die von der Zahnfußlinie die größte Beabstandung aufweist. Von einer Stelle am Zahnfuß erstreckt sich orthogonal zur Zahnfußlinie eine Zahnspitzengerade, die durch die Zahnspitze verläuft. In Richtung der Zahnspitzengerade ist die Beabstandung zwischen dem Zahnfuß und der Zahnspitze die Zahnhöhe.

In einer bevorzugten Ausführungsvariante weisen die Zähne der Verzahnung jeweils die gleiche Zahnhöhe auf. In dieser Ausführungsvariante ist der Zahnspitzenabstand die Abmessung der Beabstandung zweier benachbarter Zahnspitzen. Der Zahnspitzenabstand kann in dieser Ausführungsvariante ebenfalls bestimmt werden durch die Beabstandung der Zahnspitzengeraden zweier benachbarter Zähne auf Höhe der Zahnspitzen. Diese Bestimmung des Zahnspitzenabstands ist unabhängig von der Geometrie der Zahnfußlinie. Bei einer geraden Zahnfußlinie besteht darüber hinaus die Möglichkeit den Zahnspitzenabstand über die orthogonale Beabstandung der Zahnspitzengeraden zweier benachbarter Zähne zu bestimmen.

Diese Bestimmung des Zahnspitzenabstands kann in den meisten Fällen auch angewendet werden, wenn zwei benachbarte Zähne nicht die gleiche Zahnhöhe aufweisen. Da die Abweichungen der oben genannten Möglichkeiten zum tatsächlichen Zahnspitzenabstand zu vernachlässigen wäre. Wenn die Abweichung nicht zu vernachlässigen ist, wird der Zahnspitzenabstand auf Basis der Beabstandung der Zahnspitzengeraden zweier benachbarter Zähne approximiert. Hier wird der Zahnspitzenabstand durch die Beabstandung zweier Zahnspitzengeraden an Stellen bestimmt, wobei diese Stellen eine Beabstandung von der Zahnfußlinie aufweisen, die der Hälfte der Summe der Zahnspitzenhöhen entspricht. Diese Stelle ist demnach in Richtung der Zahnspitzengerade auf halber Strecke zwischen einer ersten Zahnspitze und einer zweiten Zahnspitze.

Der Zahnspitzenabstand liegt vorzugsweise in einem Bereich zwischen 0,5 mm und 5 mm, wobei insbesondere ein Zahnabstand zwischen 1 mm und 3 mm bevorzugt ist.

Das Trennelement kann ferner auch zwei Teiltrennelemente umfassen, die vorzugsweise parallel zueinander angeordnet sind, wobei die Verzahnungen der zwei Teiltrennelemente in Bezug auf die Trennvorrichtung auf der gleichen Seite angeordnet sind. Ferner vorzugsweise werden die translatorisch geführten Teiltrennelemente gegeneinanderlaufend geführt. Gegeneinanderlaufend bedeutet vorzugsweise, dass die Teiltrennelemente im Wesentlichen eine Bewegungsrichtung aufweisen, die der Bewegungsrichtung des jeweils anderen Teiltrennelements entgegengesetzt ist. Beispielsweise bewegt sich ein erstes Teiltrennelement in Richtung eines oberen Umkehrpunktes und ein zweites Teiltrennelement bewegt sich in Richtung eines unteren Umkehrpunktes. Durch eine derartige Anordnung besteht die Möglichkeit den am Faserverbundgelege wirksamen Zahnspitzenabstand zu verringern.

Die Verzahnung am Trennelement kann entweder einseitig oder zweiseitig angeordnet sein. Eine einseitige Verzahnung zeichnet sich vorzugsweise dadurch aus, dass die Verzahnung im Wesentlichen durch das Anordnen von Kerben und/oder anderen Ausnehmungen bzw. Vertiefungen an einer Seite des Trennelements im Bereich einer Kante erfolgt. Eine zweiseitige Verzahnung zeichnet sich vorzugsweise dadurch aus, dass die Verzahnung im Wesentlichen durch das Anordnen von Kerben und/oder anderen Ausnehmungen bzw. Vertiefungen an zwei Seiten der gleichen Kante des Trennelements erfolgt. Ferner kann die Verzahnung einen Freischnitt, der auch als Wechselschnitt bezeichnet wird, umfassen. Ein Freischnitt zeichnet sich vorzugsweise dadurch aus, dass die Zähne der Verzahnung in Richtung der Dicke des Trennelements voneinander beabstandet sind.

Die Verzahnung erstreckt sich vorzugsweise an der Kante des Trennelements, wobei die Kante vorzugsweise eine Längserstreckung aufweist, die im Wesentlichen parallel zum Hub ausgerichtet ist. Das Trennen des trockenen Faserverbundgeleges erfolgt mit dieser verzahnten Kante des Trennelements. Die translatorische Bewegung der Verzahnung erfolgt vorzugsweise im Wesentlichen parallel zur Höhe eines zu trennenden Faserverbundgeleges. Das translatorische Bewegen erfolgt mit einem Hub, so dass während des Trennens das Trennelement einen oberen und einen unteren Umkehrpunkt aufweist. Die Beabstandung des oberen und unteren Umkehrpunktes ist der Hub. Der Hub kann beispielsweise Werte zwischen 2 mm und 50 mm annehmen. Insbesondere ist ein Hub in einem Bereich zwischen 5 mm und 20 mm bevorzugt. Besonders bevorzugt ist ein Hub zwischen 10 mm und 12 mm. Vorzugsweise weist der Hub eine geringere Abmessung auf als die Höhe des Faserverbundgeleges. Alternativ vorzugsweise weist der Hub eine gleiche oder größere Abmessung auf wie bzw. als die Höhe des Faserverbundgeleges.

Erfindungsgemäß erfolgt das Trennen durch einen Hub, der eine größere Abmessung aufweist, als der Zahnspitzenabstand von zwei benachbarten Zähnen. Ferner erfolgt das Trennen vorzugsweise durch einen Vorschub der Trennvorrichtung, wobei die Vorschubrichtung in Richtung des durchzuführenden Schnittes im Faserverbundgelege ausgerichtet ist. Der Vorschub kann auch von dem Faserverbundgelege ausgeführt werden, indem dieses entgegen der Richtung der einzubringenden Schnittkante bewegt wird.

Durch die Vielzahl übereinander angeordneter Gelegelagen ist eine Vielzahl von Fasern im Wesentlichen gleichzeitig zu durchtrennen. Bei Faserverbundgelegen, die eine Höhe von mindestens 30 mm, mindestens 40mm, mindestens 50 mm, mindestens 90 mm, oder mindestens 150 mm aufweisen, sind beispielsweise ca. 11 Lagen je 10 mm Höhe übereinander angeordnet. Ein Faserverbundgelege mit einer Höhe von 90 mm umfasst demnach beispielsweise ca. 100 übereinander angeordnete Gelegelagen. Das Gewicht einer Gelegelage kann von wenigen Gramm pro Quadratmeter bis über 1000 Gramm pro Quadratmeter reichen. Beispielsweise sind Gelegelagen mit einem Gewicht von 1230 Gramm pro Quadratmeter möglich.

Durch das erfindungsgemäße Verfahren zum Trennen eines trockenen Faserverbundgeleges besteht die Möglichkeit, ein Faserverbundgelege zu trennen, wobei insbesondere die Schnittkanten weniger ausgefranst sind, im Wesentlichen kein Verschmelzen der einzelnen Fasern stattfindet und somit eine Infusion des Faserverbundgeleges verbessert werden kann. Insbesondere für Faserverbundgelege mit einer Höhe von mehr als 30mm ist das Verfahren besonders geeignet.

Die Herstellung von Faserverbundmaterialien ist in der Regel aufwendig und mit einem hohen manuellen Tätigkeitsanteil verbunden. Beispielsweise können die Faserverbundhalbzeuge zur Herstellung bestimmter Geometrien in Formen eingelegt werden. Für rotationssymmetrische Bauteile kann auch das Prinzip des Faser- bzw. Fasergelegewickelns, sogenanntes Preformwickeln, angewendet werden, das die Geschwindigkeit der Herstellung von Faserverbundgelegen deutlich erhöhen kann. Das Fasergelegewickeln erfolgt beispielsweise durch ein Abrollen von Gelegelagen auf einen Kern.

Das Fasergelegewickeln beschränkt sich daher vornehmlich darauf, rotationssymmetrische Faserverbundgelege zu erzeugen. Insbesondere wird das Fasergelegewickeln verwendet, um Faserverbundgelege für große Bauteile zu erzeugen. Eine Anforderung an derartige Bauteile besteht häufig darin, dass die Faserverbundgelege eine Höhe von mehr als 30mm, mehr als 40mm, oft mehr als 50mm, teilweise mehr als 75mm oder mehr als 90mm aufweisen. Aufgrund dieser Höhe bzw. Dicke ist ein an das Wickeln anschließendes Trennen bzw. Zurechtschneiden der Faserverbundgelege in der Regel kaum oder nicht möglich.

In einer bevorzugten Ausführungsform umfasst das Bereitstellen eines Faserverbundgeleges das Bereitstellen eines durch Fasergelegewickeln erzeugten Faserverbundgeleges, vorzugsweise eines rotationssymmetrischen Faserverbundgeleges, wobei dieses Faserverbundgelege an mindestens einer, vorzugsweise zwei oder mehreren Trennstellen derart getrennt wird, dass ein, zwei oder mehrere nicht rotationssymmetrische Faserverbundgelegeteile entstehen.

Das Verfahren ermöglicht auf diese Art und Weise die wirtschaftliche Erzeugung eines nicht rotationssymmetrischen Faserverbundgeleges, indem zunächst ein Faserverbundgelege durch Fasergelegewickeln erzeugt wird und im Anschluss gemäß der geforderten Eigenschaften getrennt bzw. zurecht geschnitten wird, vorzugsweise an einander gegenüberliegenden Trennstellen. Eine Trennstelle kann beispielsweise eine Schnittfläche sein.

In einer bevorzugten Ausführungsvariante des Verfahrens ist vorgesehen, dass das Trennelement als Sägeblatt bereitgestellt wird. Ein Sägeblatt weist in der Regel eine flächige Erstreckung aus, wobei orthogonal zu der flächigen Erstreckung eine Dicke aufgewiesen wird. Die flächige Erstreckung des Sägeblattes weist darüber hinaus eine Längserstreckung und eine Quererstreckung auf. Die Längserstreckung ist in der Regel um ein Vielfaches größer als die Quererstreckung. An einer oder beiden Kanten, die jeweils parallel zur Längserstreckung des Sägeblattes verlaufen, ist die Verzahnung angeordnet. Im vorliegenden Fall ist diese Verzahnung als ein Wellenprofil ausgebildet.

Gemäß einer besonders bevorzugten Ausführungsvariante des Verfahrens ist vorgesehen, dass der Hub parallel zu einer Zahnspitzenverbindungslinie verläuft. Eine Zahnspitzenverbindungslinie verbindet die Zahnspitzen der Zähne der Verzahnung. Voraussetzung hierfür ist insbesondere eine gerade Zahnspitzenverbindungslinie und somit auch die Möglichkeit die Zahnspitzen der angeordneten Zähne mit einer Gerade zu verbinden. Vorzugsweise sind die einzelnen Zähne bzw. Wellen der Verzahnung jeweils mit einer gleichen Zahnhöhe ausgebildet, so dass die Zahnspitzenverbindungslinie parallel zu einer Längserstreckung des Trennelements verläuft. Somit ist die Längserstreckung des Trennelements vorzugsweise ebenfalls parallel zum Hub.

Gemäß einer besonders bevorzugten Ausführungsvariante des Verfahrens ist vorgesehen, dass der Hub die 1,5- bis 20-fache Abmessung des Zahnspitzenabstands aufweist. Der Zahnspitzenabstand ist der Abstand der Zahnspitzen zwischen zwei benachbarten Zähnen, so dass in dieser Ausführungsvariante der Hub mindestens 50% größer sein muss als der Zahnspitzenabstand bzw. der Abstand zweier benachbarter Zähne. Ferner ist der Hub kleiner als das zwanzigfache des Zahnspitzenabstands. Im Falle, dass der Zahnspitzenabstand zwischen benachbarten Zähnen entlang der Verzahnung nicht konstant ist, sieht diese Ausführungsvariante vorzugsweise vor, dass der Hub die 1,5- bis 20-fache Abmessung des größten Zahnspitzenabstands benachbarter Zähne entlang der Verzahnung aufweist.

Gemäß einer weiteren besonders bevorzugten Ausführungsvariante des Verfahrens ist vorgesehen, dass der Hub die 2- bis 5-fache Abmessung des Zahnspitzenabstands aufweist. Gemäß einer weiteren besonders bevorzugten Ausführungsvariante des Verfahrens ist vorgesehen, dass der Hub die 15- bis 20-fache Abmessung des Zahnspitzenabstands aufweist. Gemäß einer weiteren besonders bevorzugten Ausführungsvariante des Verfahrens umfasst dieses ein Bereitstellen einer Trennvorrichtung mit einem elektrischen und/oder pneumatischen und/oder hydraulischen Antrieb. Dieser Antrieb ist insbesondere in der Trennvorrichtung angeordnet und ausgebildet, um das Trennelement mit einem Hub in einer im Wesentlichen translatorischen Bewegung zu bewegen.

Gemäß einer weiteren besonders bevorzugte Ausführungsvariante des Verfahrens ist vorgesehen, dass die Trennvorrichtung als Stoßmessermaschine bereitgestellt wird. Eine Stoßmessermaschine umfasst insbesondere einen Ständer, der vorzugsweise ausgebildet ist, die Stoßmaschine auf einer, insbesondere waagerechten, Fläche in einer im Wesentlichen aufrechten Position zu halten, und eine Antriebseinheit, die vorzugsweise angeordnet und ausgebildet ist, ein Trennelement, insbesondere mit einer translatorischen Bewegung, zu führen. Zu diesem Zweck weist die Stoßmessermaschine vorzugsweise eine Aufnahmevorrichtung für ein Trennelement auf.

Die Stoßmessermaschine kann vorzugsweise als Handgerät ausgeführt sein, so dass die Stoßmessermaschine von einem Bediener, vorzugsweise auf einer waagerechten, Fläche bewegt werden kann, beispielsweise in Richtung des Vorschubs. Insbesondere wird eine derartige Stoßmessermaschine dafür genutzt, einen Gegenstand, der vorzugsweise eine im Wesentlichen flächige Ausbildung im Wesentlichen flächenparallel zu einem Untergrund der Stoßmessermaschine aufweist, zu trennen. Alternativ vorzugsweise kann die Stoßmessermaschine auch automatisiert, beispielsweise mittels eines Roboters, bewegt werden.

Gemäß einer weiteren bevorzugten Ausführungsvariante ist vorgesehen, dass die Trennvorrichtung eine Niederhaltevorrichtung umfasst. Die Niederhaltevorrichtung dient insbesondere dazu, das Faserverbundgelege in Richtung seiner Höhe zusammenzupressen, um so ein verbessertes Trennen zu erreichen. Die Niederhaltevorrichtung umfasst vorzugsweise einen Niederhalter, der ferner vorzugsweise in Richtung des Hubes der Trennvorrichtung verstellbar ist. Ferner ist Niederhalter vorzugsweise derart angeordnet, dass das Trennelement das Faserverbundgelege trennen kann.

Gemäß einer weiteren bevorzugten Ausführungsvariante ist vorgesehen, dass das Trennelement eine Trennelementführung umfasst, die das Trennelement im Wesentlichen in seiner translatorischen Richtung führt. Insbesondere ist es bevorzugt, dass die Trennelementführung im Bereich des oberen und/oder des unteren Umkehrpunktes des Trennelements angeordnet ist. Die Trennelementführung soll eine Abweichung von einer Soll-Bewegungsbahn verhindert oder zumindest vermindern. Die Trennelementführung kann beispielsweise das sogenannte Flattern eines Trennelements vermindern. Somit kann die Qualität des Trennens weiter gesteigert werden. Darüber hinaus kann eine Trennelementführung das Abbrechen des Trennelements verhindern bzw. hinauszögern.

Gemäß einer weiteren bevorzugten Ausführungsvariante ist vorgesehen, dass die Trennelementführung eine Fluidzuführungsvorrichtung umfasst. Die Fluidzuführungsvorrichtung kann innerhalb der Elemente der Trennelementführung angeordnet sein und/oder an äußeren Oberflächen der Elemente der Trennelementführung angeordnet sein. Die Fluidzuführung kann der Zuführung eines Fluids zum Trennelement zur Kühlung des Trennelements dienen, so dass das Trennelement und somit auch die zu trennenden Fasern eine verminderte Temperatur aufweisen können. Ferner kann das Fluid der Entfernung von Spänen und dergleichen dienen.

Gemäß einer weiteren bevorzugten Ausführungsvariante ist vorgesehen, dass die Trennvorrichtung einen Hub ausführt, der eine Frequenz von >1 Hertz aufweist. In besonders bevorzugten Ausführungsvarianten führt die Trennvorrichtung einen Hub mit einer Frequenz größer 10 Hertz aus, wobei eine Frequenz zwischen 40 Hertz und 100 Hertz besonders bevorzugt ist. Ferner vorzugsweise weist der Hub eine Frequenz zwischen 50 Hertz und 60 Hertz auf. Darüber hinaus sind auch Frequenzen von größer 100 Hertz, größer 200 Hertz, größer 300 Hertz, oder größer 400 Hertz möglich.

Gemäß einer weiteren bevorzugten Ausführungsvariante ist vorgesehen, dass das Faserverbundgelege aus Glasfasern besteht oder Glasfasern umfasst. Eine Glasfaser ist insbesondere eine aus Glas bestehende lange dünne Faser. Diese dünnen Fasern werden aus einer Glasschmelze bei der Herstellung gezogen und im Anschluss zu einer Vielzahl von Endprodukten weiterverarbeitet. Neben Glasfasern kann das Faserverbundgelege außerdem weitere anorganische Fasern, wie beispielsweise Basaltfasern oder Stahlfasern umfassen, aber auch organische Fasern wie beispielsweise Aramid- und/oder Kohlenstoff- und/oder Polyesterfasern. Derartige Fasern, insbesondere Glasfasern, weisen eine besonders hohe Festigkeit auf, so dass das Trennen einer einzelnen Faser und insbesondere das Trennen eines diese Fasern umfassenden Faserverbundgeleges deutlich erschwert ist. Darüber hinaus kann das Faserverbundgelege Bindemittel, wie beispielsweise Klebstoff, enthalten.

Gemäß einer weiteren bevorzugten Ausführungsvariante des Verfahrens ist vorgesehen, dass das Faserverbundgelege eine Höhe in Richtung des Hubs aufweist und diese Höhe 50mm oder größer ist. Das Faserverbundgelege weist vorzugsweise eine flächige Erstreckung auf und orthogonal zu dieser flächigen Erstreckung eine Höhe. Darüber hinaus wird dieses Faserverbundgelege insbesondere durch das Trennelement getrennt, welches einen Hub ausführt, der parallel zu dieser Höhe ausgerichtet ist. Darüber hinaus weist das Faserverbundgelege in Richtung seiner Höhe eine Abmessung bzw. eine Erstreckung von 50mm oder mehr auf. Diese 50mm Höhe können sich auf einen einzelnen Punkt des Faserverbundgeleges und/oder auf mehrere Punkte bzw. Stellen des Faserverbundgeleges beziehen. Vorzugsweise bedeutet die Angabe einer Höhe, dass das Faserverbundgelege diese Höhe an mehr als 50% seiner flächigen Erstreckung aufweist, insbesondere an mehr als 75% oder mehr als 90% seiner flächigen Erstreckung..

Gemäß einer weiteren bevorzugten Ausführungsvariante des Verfahrens ist vorgesehen, dass das Faserverbundgelege eine Höhe in Richtung des Hubs aufweist und diese Höhe 75mm oder größer ist. Gemäß einer weiteren Ausführungsvariante des Verfahrens ist vorgesehen, dass das Faserverbundgelege eine Höhe in Richtung des Hubs aufweist und diese Höhe 90mm oder größer ist.

Gemäß einer weiteren besonders bevorzugten Ausführungsvariante des Verfahrens ist vorgesehen, dass die Verzahnung einen konstanten Zahnspitzenabstand aufweist. Ein konstanter Zahnspitzenabstand bedeutet, dass die Zahnspitzen der Zähne, hier der Wellen, die gleiche Beabstandung aufweisen. Insbesondere bedeutet ein konstanter Zahnspitzenabstand, dass eine Vielzahl bzw. eine Mehrzahl der angeordneten Zähne einen konstanten Zahnspitzenabstand aufweisen. Beispielsweise können auch einzelne Zähne dieser Verzahnung, beispielsweise der erste und/oder der letzte Zahn der Verzahnung, sprich solche Zähne die nur auf einer Seite einen benachbarten Zahn aufweisen, einen Zahnspitzenabstand aufweisen, der nicht dem Zahnspitzenabstand der Mehrzahl bzw. der Vielzahl der Zähne entspricht.

In einer weiteren besonders bevorzugten Ausführungsvariante des Verfahrens ist vorgesehen, dass die Verzahnung einen Zahnspitzenabstand zwischen 0,5 mm und 2,5 mm, vorzugsweise zwischen 0,8 mm und 2 mm, insbesondere zwischen 1 mm und 1,5 mm, aufweist. Gemäß einer weiteren bevorzugten Ausführungsvariante des Verfahrens ist vorgesehen, dass die Verzahnung einen variierenden Zahnspitzenabstand aufweist. Ein variierender Zahnspitzenabstand bedeutet insbesondere, dass die bereits im Vorherigen definierten Zahnspitzenabstände nicht konstant sind. Vorzugsweise sind in dieser Ausführungsvariante die an der Verzahnung angeordneten Zähne nach dem Chaosprinzip angeordnet, so dass keine Systematik in der Anordnung festzustellen ist. Alternativ vorzugsweise weist die Anordnung der Zähne ein System auf, welches dennoch keinen konstanten Zahnspitzenabstand bereitstellt.

Gemäß einer weiteren bevorzugten Ausführungsvariante des Verfahrens ist vorgesehen, dass die Verzahnung einen alternierenden Zahnspitzenabstand aufweist. Alternierend bedeutet vorzugsweise, dass etwas mehr als einmal regelmäßig im Wechsel aufeinander folgt. Ein alternierender Zahnspitzenabstand bedeutet demnach, dass die Verzahnung zwei, drei oder mehrere unterschiedliche Zahnspitzenabstände aufweist. Diese unterschiedlichen Zahnspitzenabstände können sich in beliebiger Reihenfolge wiederholen, wobei vorzugsweise eine Regelmäßigkeit zu erkennen ist.

Gemäß einer weiteren bevorzugten Ausführungsvariante des Verfahrens ist vorgesehen, dass das Trennen an einer Kante des Faserverbundgeleges beginnt. Vorzugsweise beginnt das Trennen daher von einer Außenseite des Faserverbundgeleges an. Ferner vorzugsweise kann das Faserverbundgelege auch innerhalb seiner flächigen Erstreckung eine Kante aufweisen, von der aus das Trennen beginnen kann. Unter der Kante ist insbesondere ein Rand bzw. eine äußere Begrenzung des Faserverbundgeleges zu verstehen.

In einer weiteren besonders bevorzugten Ausführungsvariante des Verfahrens ist vorgesehen, dass das Trennen von einem Loch in dem Faserverbundgelege beginnt. Beispielsweise kann dieses Loch in dem Faserverbundgelege speziell für das Trennverfahren bereitgestellt werden und/oder dieses Loch ist aus konstruktiven Ursachen eingebracht worden. Alternativ wird das Loch als ein weiterer vorgeschalteter Schritt des Verfahrens eingebracht, welcher vorzugsweise ebenfalls mit der Trennvorrichtung erfolgt.

Es wird ferner beschrieben die Verwendung einer nicht beanspruchten Trennvorrichtung zum Trennen eines trockenen Faserverbundgeleges mit einer Vielzahl übereinander angeordneter Gelegelagen, umfassend ein Trennelement mit einer Verzahnung, wobei die Verzahnung ein Wellenprofil mit einer Mehrzahl von Zähnen aufweist, wobei das Trennelement translatorisch mit einem Hub bewegt wird, wobei der Hub größer ist als ein Zahnspitzenabstand von zwei benachbarten Zähnen der Verzahnung.

Es wird ferner beschrieben eine nicht beanspruchte Windenergieanlage mit mindestens einem Rotorblatt wobei das Rotorblatt ein Faserverbundgelege umfasst, das mit einem Verfahren gemäß der im Vorherigen genannten Ausführungsvarianten getrennt wurde. In dem für den Betrieb einsatzbereiten Rotorblatt liegt das Faserverbundgelege vorzugsweise nicht als trockenes Faserverbundgelege vor, sondern vielmehr als Faserverbundmaterial, das das Faserverbundgelege und eine Matrix umfasst, wobei die Matrix vorzugsweise durch eine Infusion eingebracht wurde und ferner vorzugsweise ausgehärtet ist. Das mit dem getrennten, trockenen Faserverbundgelege erzeugte Faserverbundmaterial zeichnet sich insbesondere durch einen höheren Glasfaseranteil im Bereich der Schnittkante aus. Ferner zeichnet sich die Schnittkante durch einzelne Fasern, beispielsweise Glasfasern, bzw. Elementarfäden aus, die beim Trennen aus den Gelegelagen und/oder aus einzelnen Rovings herausgezogen wurden. Darüber hinaus zeichnet sich die mit dem erfindungsgemäßen Verfahren erzeugte Schnittkante dadurch aus, dass (zumindest in einem höheren Maße als bei nicht geschnittenen, sondern direkt als separate Teile hergestellten Faserverbundbauteilen) an der Schnittkante Faserbruchstücke und/oder Staub des Fasermaterials (z.B. Glasstaub), insbesondere auch zwischen den Gelegelagen, erkennbar ist bzw. sind.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Verfahrens zum Trennen eines trockenen Faserverbundgeleges verwiesen.

Bevorzugte Ausführungsformen werden beispielhaft anhand der beiliegenden Figuren erläutert. Beansprucht wird lediglich ein Verfahren.

Es zeigen:
- Fig. 1:: eine schematische Ansicht einer beispielhaften Ausführungsform einer nicht beanspruchten Windenergieanlage;
- Fig. 2:: eine beispielhafte Ausführungsform des erfindungsgemäßen Verfahrens als schematisches Ablaufdiagramm;
- Fig. 3:: eine Seitenansicht einer beispielhaften Ausführungsform einer nicht beanspruchten Trennvorrichtung;
- Fig. 4:: eine Trennvorrichtung gemäß Figur 3 mit einer beispielhaften Ausführungsform eines Faserverbundgeleges;
- Fig. 5a:: eine Seitenansicht einer schematischen beispielhaften Ausführungsform eines Trennelements;
- Fig. 5b:: eine Detailansicht des Trennelements gemäß Figur 5a;
- Fig. 5c:: eine Detailansicht einer schematischen beispielhaften Ausführungsform einer Verzahnung;
- Fig. 6:: eine Seitenansicht einer weiteren schematischen beispielhaften Ausführungsform eines Trennelements;
- Fig. 7:: eine dreidimensionale Ansicht einer beispielhaften Ausführungsform eines Rotorblattes; und
- Fig. 8:: eine schematische Ansicht einer beispielhaften Ausführungsform eines Preformwickelns.

In den Figuren sind gleiche oder im Wesentlichen funktionsgleiche bzw. ähnliche Elemente mit den gleichen Bezugszeichen bezeichnet.

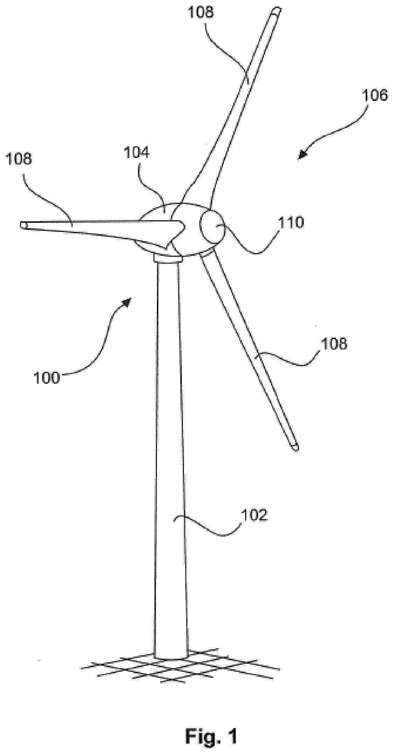

Figur 1 zeigt eine schematische Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

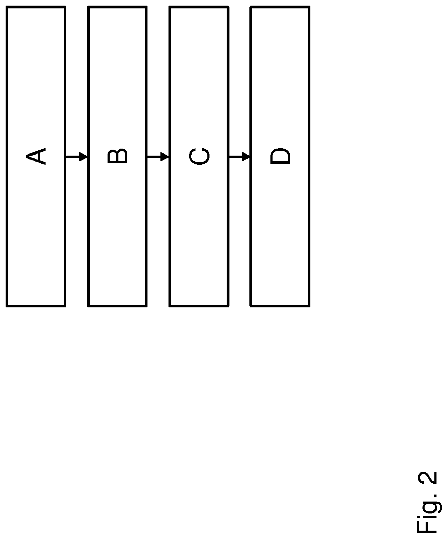

Figur 2 zeigt eine beispielhafte Ausführungsform des erfindungsgemäßen Verfahrens als schematisches Ablaufdiagramm. In einem Verfahrensschritt A wird ein trockenes Faserverbundgelege bereitgestellt. Insbesondere wird das Faserverbundgelege derart bereitgestellt, dass dieses im Anschluss getrennt werden kann. Vorzugsweise wird das Faserverbundgelege beispielsweise auf einem Tisch oder einer anderen im Wesentlichen waagerechten Fläche bereitgestellt, der bzw. die ausgebildet und geeignet ist ein Faserverbundgelege derart anzuordnen, dass dieses mit einer Trennvorrichtung getrennt werden kann.

Insbesondere ist das Faserverbundgelege vorzugsweise mit seiner flächigen Erstreckung im Wesentlichen horizontal angeordnet. In einem Verfahrensschritt B wird eine Trennvorrichtung bereitgestellt, welche ausgebildet und angeordnet ist ein Faserverbundgelege zu trennen. Die Trennvorrichtung kann beispielsweise eine Stoßmessermaschine sein. In den Verfahrensschritten C und D wird das bereitgestellte Faserverbundgelege mit der bereitgestellten Trennvorrichtung getrennt. Die Trennfuge im Faserverbundgelege kann eine gerade und/oder bogenförmige Geometrie aufweisen. Ferner vorzugsweise erfolgt das Trennen derart, dass das Faserverbundgelege im Bezug auf seine flächige Erstreckung in zwei oder mehrere Teile getrennt wird. Dieses Trennen erfolgt insbesondere durch den Verfahrensschritt D, in dem ein translatorisches Bewegen einer Verzahnung des Trennelements am und/oder in dem Faserverbundgelege erfolgt. Diese translatorische Bewegung der Verzahnung an bzw. in dem Faserverbundgelege erfolgt erfindungsgemäß derart, dass der translatorisch ausgeführte Hub des Trennelements eine größere Abmessung aufweist, als ein Zahnspitzenabstand der Verzahnung. Darüber hinaus weist die Verzahnung ein Wellenprofil mit einer Mehrzahl von Zähnen auf.

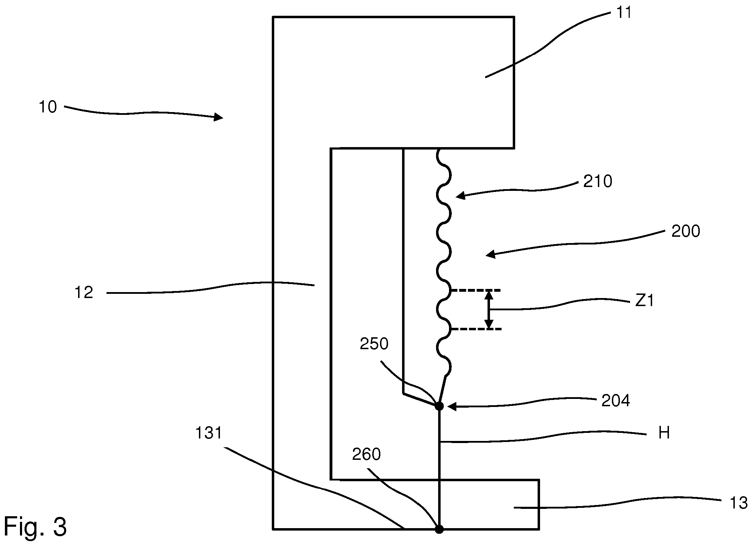

Figur 3 zeigt eine Seitenansicht einer beispielhaften Ausführungsform einer Trennvorrichtung. Die Trennvorrichtung 10 umfasst einen Antriebsbereich 11 und einen Trennvorrichtungsfuß 13 zwischen denen sich einseitig ein Trennvorrichtungsständer 12 erstreckt. Der Antriebsbereich 11 und der Trennvorrichtungsfuß 13 kragen daher von dem Trennvorrichtungsständer 12 aus. Antriebsbereich 11 und Trennvorrichtungsfuß 13 kragen darüber hinaus auf der gleichen Seite des Trennvorrichtungsständers 12 aus. Der Trennvorrichtungsfuß 13 weist ferner eine horizontale Unterseite 131 auf, mit der die Trennvorrichtung 10 auf einen Untergrund gestellt werden kann. Die horizontale Unterseite 131 des Trennvorrichtungsfußes 13 ist im Wesentlichen orthogonal zu einem vertikal geführten Trennelement 200 angeordnet. Das vertikal geführte Trennelement 200 ist mit einem Ende innerhalb des Antriebsbereiches 11 angeordnet, so dass das Trennelement 200 zwischen dem Antriebsbereich 11 und dem Trennvorrichtungsfuß 13 verortet ist.

Das Trennelement 200 weist eine flächige Erstreckung zwischen einem distalen Ende 204 und einem proximalen Ende (nicht dargestellt), das dem distalen Ende 204 in Bezug auf die Längserstreckung gegenüberliegend angeordnet ist, auf. An einer Kante des Trennelements 200 ist darüber hinaus eine Verzahnung 210 angeordnet. Die Verzahnung 210 ist an der Kante des Trennelements 200 angeordnet, welche dem Trennvorrichtungsständer 12 abgewandt ist. Die Verzahnung 210 weist ein Wellenprofil auf, das eine Anzahl an Zähnen aufweist, die einen konstanten Zahnspitzenabstand Z1 zu ihren benachbarten Zähnen aufweisen. Das proximale Ende der Trennvorrichtung 10 ist in dem Antriebsbereich 11 der Trennvorrichtung angeordnet. Diese Anordnung erfolgt insbesondere dahingehend, dass die Trennvorrichtung 10 mit dem Antriebsbereich ausgebildet ist das Trennelement 200 translatorisch vertikal zu bewegen, wobei diese Bewegung insbesondere mit einem Hub H erfolgt. Ferner erfolgt diese Bewegung des Trennelements 200 dahingehend, dass der Hub H größer ist als ein Zahnspitzenabstand Z1. Der Hub H kann sich bis zur horizontalen Unterseite 131 des Trennvorrichtungsfußes 13 erstrecken. Alternativ ist ein unterer Umkehrpunkt des Hubs in Richtung des Antriebsbereiches 11 von der horizontalen Unterseite 131 beabstandet. In Figur 3 befindet sich das Trennelement 200 in einem oberen Umkehrpunkt 250 des Hubs H. Der untere Umkehrpunkt 260 des Hubs ist auf einer Höhe mit der horizontalen Unterseite 131 des Trennvorrichtungsfußes 13.

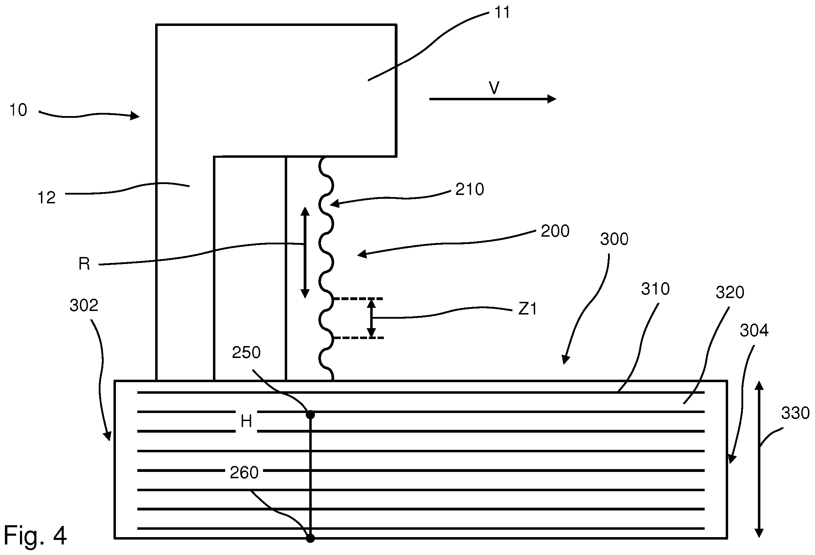

Figur 4 zeigt eine Trennvorrichtung gemäß Figur 3 mit einer beispielhaften Ausführungsform eines trockenen Faserverbundgeleges. Das Faserverbundgelege 300 umfasst Fasern 310 sowie einen zwischen den Fasern 310 angeordnetes Bindemittel320. Durch die übereinander, insbesondere in der in Figur 3 gezeigten Anordnung im Wesentlichen vertikal übereinander, angeordneten Fasern 310, entsteht eine Höhe 330 des Faserverbundgeleges.

Die Trennvorrichtung 10 ist insbesondere dahingehend ausgebildet, dass diese das Faserverbundgelege 300 von einem ersten Ende 302 zu einem zweiten Ende 304 durchtrennen kann. Dies erfolgt durch ein im Wesentlichen translatorisches Bewegen des Trennelements 200 am und/oder im trockenen Faserverbundgelege in einer Bewegungsrichtung R mit einem Hub, der größer ist als ein Zahnspitzenabstand von zwei benachbarten Zähnen der Verzahnung. Darüber hinaus bewegt sich das Trennelement 200 in einer Bewegungsrichtung R während sich die Trennvorrichtung 10 mit der Vorschubrichtung V durch das Faserverbundgelege bewegt.

Alternativ kann die Vorschubrichtung V auch bereitgestellt werden, indem das Faserverbundgelege 300 in eine Richtung bewegt wird, die entgegengesetzt zu der eingezeichneten Vorschubrichtung V ausgerichtet ist. Das distale Ende 204 (siehe Fig. 3) des Trennelements 200 wird zwischen einem oberen Umkehrpunkt 250 und einem unteren Umkehrpunkt 260 in Richtung der Bewegungsrichtung R geführt. In den Umkehrpunkten 250, 260 weist das Trennelement jeweils eine Geschwindigkeit in seiner Bewegungsrichtung R von null auf. Zwischen dem oberen Umkehrpunkt 250 und dem unteren Umkehrpunkt 260 ist eine Entfernung, die dem Hub H entspricht. In der Figur 4 ist der Hub sowie der obere und untere Umkehrpunkt 250, 260 lediglich schematisch dargestellt, um die Bewegungsform des Trennelements im bzw. am Faserverbundgelege 300 zu verdeutlichen. Vorzugsweise ist der Hub geringer als eine Höhe des Faserverbundgeleges 330. Alternativ vorzugsweise ist der Hub gleich der Höhe oder größer als die Höhe des Faserverbundgeleges 330.

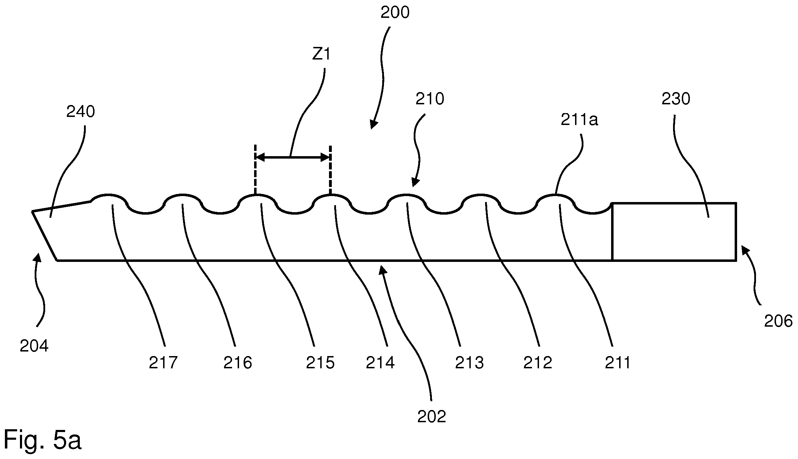

Figur 5a zeigt eine Seitenansicht einer beispielhaften Ausführungsform eines Trennelements. Das Trennelement 200 erstreckt sich von einem proximalen Ende 206 zu einem distalen Ende 204. In einem Bereich angrenzend an das proximale Ende 206 weist das Trennelement 200 einen Befestigungsabschnitt 230 auf. Dieser Befestigungsabschnitt 230 ist angeordnet und ausgebildet, um an einer Trennvorrichtung 10 derart angeordnet zu werden, so dass das Trennelement 200 mit einer translatorischen Bewegung in einer Bewegungsrichtung und mit einem Hub bewegt werden kann. Dafür wird der Befestigungsabschnitt 230 beispielsweise in einer dafür ausgebildeten Aufnahmeeinrichtung des Antriebsbereiches 11 eingespannt. In einem Bereich angrenzend an das distale Ende 204 des Trennelements 200 ist die Messerspitze 240 angeordnet. Zwischen der Messerspitze 240 und dem Befestigungsabschnitt 230 befindet sich der Schaft 202. Der Schaft 202 weist eine erste Seite auf an der eine Verzahnung 210 angeordnet ist. Auf einer dieser gegenüberliegenden Seite des Schaftes 202 weist dieser eine gerade Kante auf.

Vorliegend weist die Verzahnung 210 ein Wellenprofil auf. Die Verzahnung 210 weist einen ersten Zahn 211, einen zweiten Zahn 212, einen dritten Zahn 213, einen vierten Zahn 214, einen fünften Zahn 215, einen sechsten Zahn 216 und einen siebten Zahn 217 auf. Jeder Zahn weist eine Zahnspitze auf, wobei exemplarisch für den ersten Zahn 211 die zu diesem gehörige erste Zahnspitze 211a dargestellt ist. Zwischen den Zähnen befinden sich Zahnzwischenräume, die vorliegend als Wellental ausgebildet sind. Darüber hinaus erstreckt sich ein Zahnspitzenabstand Z1 auf kürzestem Wege zwischen zwei benachbarten Zahnspitzen. Das beispielhafte Trennelement 200 weist hier einen konstanten Zahnspitzenabstand Z1 auf.

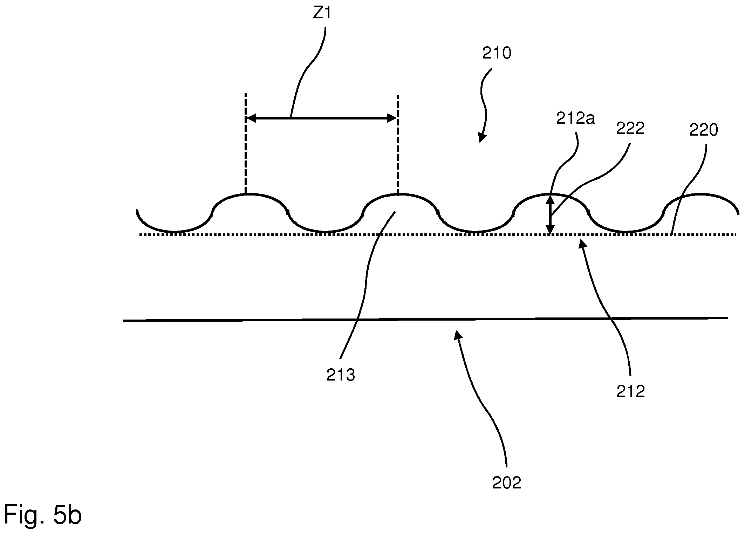

Figur 5b zeigt eine Detailansicht des Trennelements gemäß Figur 5a. Die Stelle eines Zahns, die in orthogonaler Richtung die größte Beabstandung von der Zahnfußlinie 220 aufweist, wird als Zahnspitze bezeichnet. Der zweite Zahn 212 weist beispielsweise die Zahnspitze 212a auf. Zwischen der Zahnfußlinie 220 und der Zahnspitze 212a erstreckt sich die Zahnhöhe 222. Zwischen den Zahnspitzen von zwei benachbarten Zähnen erstreckt sich auf kürzestem Wege der Zahnspitzenabstand Z1.

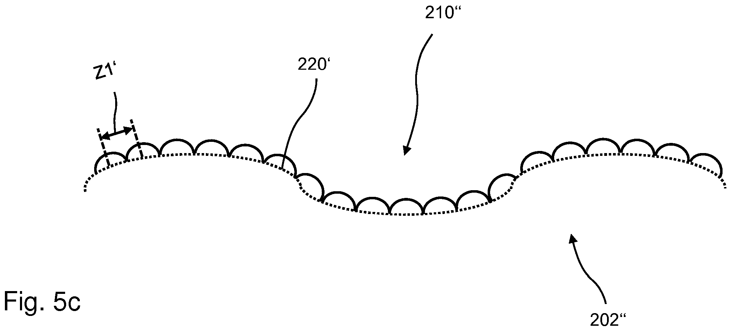

Figur 5c zeigt eine Detailansicht einer schematischen beispielhaften Ausführungsform einer Verzahnung. An dem Schaft 202" ist eine Verzahnung 210" angeordnet, die eine Zahnfußlinie 220' aufweist. Die Zahnfußlinie 220' ist in dieser Ausführungsform keine Gerade, sondern weist einen sinusförmigen Verlauf auf. Die Verzahnung 210" weist eine Vielzahl an Zähnen auf, deren Zahnfüße an der Zahnfußlinie 220' angeordnet sind. Darüber hinaus weisen die Zahnspitzen der Zähne eine Beabstandung auf, die dem Zahnspitzenabstand Z1' entspricht.

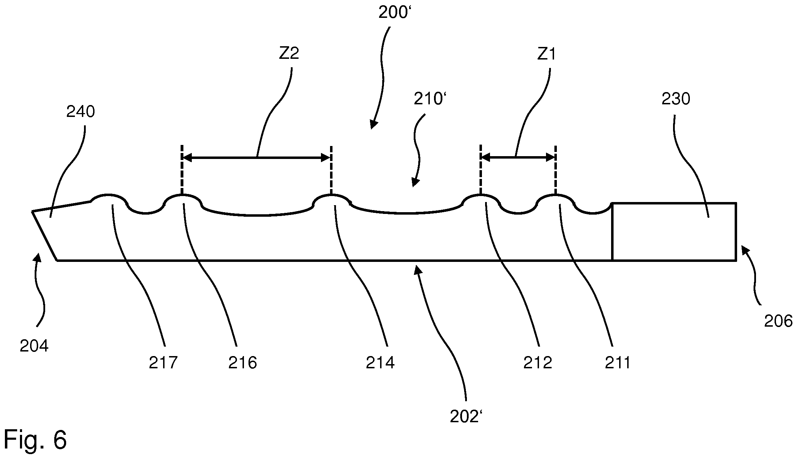

Figur 6 zeigt eine Seitenansicht einer weiteren beispielhaften Ausführungsform eines Trennelements. Das Trennelement 200' unterscheidet sich von dem zuvor beschriebenen Trennelement 200 insbesondere dadurch, dass dieses eine andere Verzahnung 210' aufweist. Insbesondere zeichnet sich diese Verzahnung 210' dadurch aus, dass diese einen ersten Zahnspitzenabstand Z1 und einen zweiten Zahnspitzenabstand Z2 aufweist. Das Trennelement 200' umfasst einen ersten Zahn 211, einen zweiten Zahn 212, einen vierten Zahn 214, einen sechsten Zahn 216 und einen siebten Zahn 217. Zwischen den Zahnspitzen des ersten Zahns 211 und des zweiten Zahns 212 sowie zwischen den Zahnspitzen des sechsten Zahns 216 und des siebten Zahns 217 erstreckt sich der erste Zahnspitzenabstand Z1. Der zweite Zahn 212 und der vierte Zahn 214 sowie der vierte Zahn 214 und der sechste Zahn 216 sind mit einem Zahnspitzenabstand Z2 beabstandet. Vorliegend weist der zweite Zahnspitzenabstand Z2 etwa die doppelte Abmessung auf wie der erste Zahnspitzenabstand Z1. Die vorliegende Verzahnung 210' entspricht daher einer alternierenden Verzahnung, da diese den ersten Zahnspitzenabstand Z1 mehr als einmal regelmäßig im Wechsel aufeinander folgen lässt.

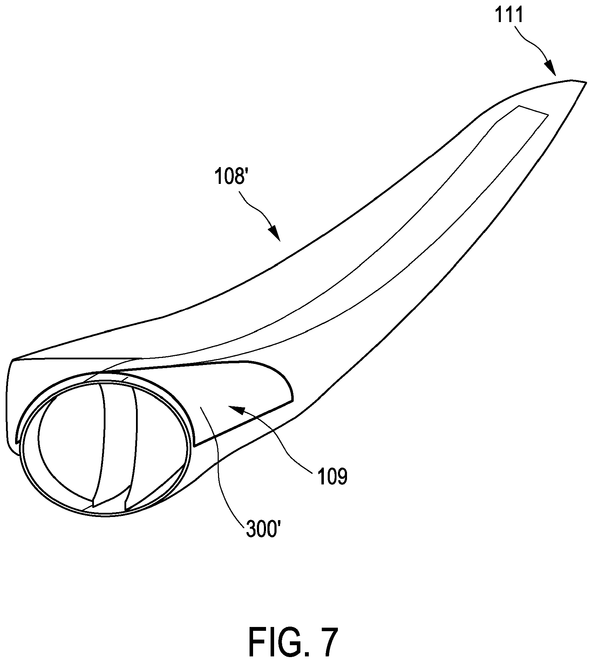

Figur 7 zeigt eine dreidimensionale Ansicht einer beispielhaften Ausführungsform eines Rotorblattes, das in einer Windenergieanlage 100 nach Figur 1 zum Einsatz kommen kann. Das Rotorblatt 108' erstreckt sich von einem Wurzelbereich 109 zu einem Tipbereich 111. In dem Wurzelbereich ist ein Faserverbundgelege 300', hier als Preform, eingelegt, wobei nach diesem Einlegen eine Infusion dieses Faserverbundgeleges erfolgt. Exemplarisch ist das Preform hier also ein Lagenpaket, welches im Wurzelbereich in eine Schale vor der Infusion eingelegt wurde. Um geeignete Faserverbundgelege 300' für Rotorblätter 108', insbesondere für deren Wurzelbereich 109, bereitzustellen, müssen Faserverbundgelege getrennt werden, sofern sie nicht als Halbschalen hergestellt werden. Dieses Trennen kann mittels des in Figur 2 gezeigten Verfahrens mit den Schritten A bis D sowie mittels der in den Figuren 2 und 3 beschriebenen Trennvorrichtung 10 erfolgen. Insbesondere ist das Trennen eines Faserverbundgeleges 300' für einen Wurzelbereich 109 eines Windenergieanlagenrotorblattes 108' notwendig, wenn das Halbzeug des Faserverbundgeleges 300 röhrenförmig bereitgestellt wird.

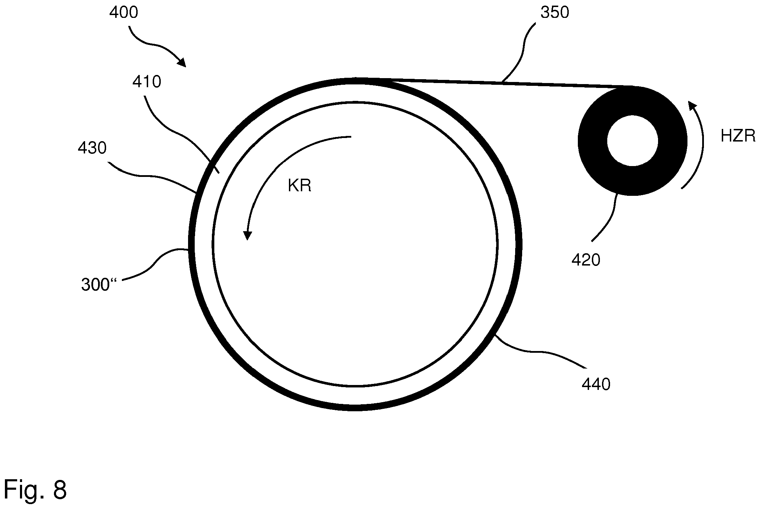

Figur 8 zeigt eine schematische Ansicht einer beispielhaften Ausführungsform eines Preformwickelns. Die Faserverbundgelegeherstellungsvorrichtung 400 umfasst einen Kern 410 auf den ein Gelege 350 von einem Gelegehalbzeug 420 abgerollt wird. Der Kern 410 bewegt sich beispielsweise in einer Kernrichtung KR und das Gelegehalbzeug 420 bewegt sich in einer Halbzeugrichtung HZR. Somit wird auf dem Kern 410 ein Faserverbundgelege 300" aufgerollt. Der Kern wird insbesondere nach der Herstellung des Faserverbundgeleges 300" entfernt. Um dieses röhrenförmige, trockene Faserverbundgelege 300" dann derart zu trennen, dass dieses beispielsweise in ein Rotorblatt 108', insbesondere in dessen Wurzelbereich 109, eingesetzt werden kann, muss dieses Faserverbundgelege 300" vorzugsweise entsprechend zugeschnitten werden. Dazu wird das röhrenförmige Faserverbundgelege vorzugsweise an zwei, sich vorzugsweise im Wesentlichen gegenüberliegenden, Trennstellen 430, 440 durchtrennt. Dieser Zuschnitt kann mit dem erfindungsgemäßen Verfahren erfolgen.

Insbesondere kann mit dem erfindungsgemäßen Verfahren ein präziser Zuschnitt der Faserverbundgelege erfolgen und darüber hinaus eine gute Kantenqualität bzw. Schnittkantenqualität erreicht werden. Durch diese gute Kanten- bzw. Schnittkantenqualität wird das Besäumen des Faserverbundgeleges vereinfacht wodurch insbesondere die Kosten sowie der notwendige Personaleinsatz reduziert werden und eine verbesserte Infusion ermöglicht wird. Darüber hinaus können durch die Faserverbundgelegeherstellungsvorrichtung 400 sehr schnell röhrenförmige Halbzeuge mit größer Höhe für Faserverbundgelege hergestellt werden und im Anschluss zurechtgeschnitten werden. Die Schnittflächen sind so insbesondere fransenfrei oder zumindest weniger ausgefranst und die an die Schnittfläche angrenzenden Fasern sind nicht oder zumindest vermindert verschmolzen. Somit können sich die Kosten für ein Rotorblatt einer Windenergieanlage deutlich reduzieren.

### Bezugszeichen

- 10: Trennvorrichtung
- 11: Antriebsbereich der Trennvorrichtung
- 12: Trennvorrichtungsständer
- 13: Trennvorrichtungsfuß
- 100: Windenergieanlage
- 102: Turm
- 104: Gondel
- 106: Rotor
- 108, 108': Rotorblätter
- 109: Wurzelbereich
- 110: Spinner
- 111: Tipbereich
- 131: untere Oberfläche Trennvorrichtungsfuß
- 200, 200': Trennelement
- 202, 202', 202": Schaft
- 204: proximales Ende
- 206: distales Ende
- 210, 210', 210": Verzahnung
- 211: erster Zahn
- 211a: erste Zahnspitze
- 212: zweiter Zahn
- 213: dritter Zahn
- 214: vierter Zahn
- 215: fünfter Zahn
- 216: sechster Zahn
- 217: siebter Zahn
- 220, 220': Zahnfußlinie
- 230: Befestigungsabschnitt
- 240: Messerspitze
- 300, 300', 300": Faserverbundgelege
- 302: erstes Ende Faserverbundgelege
- 304: zweites Ende Faserverbundgelege
- 310: Faser
- 320: Bindemittel
- 330: Höhe Faserverbundgelege
- 350: Gelege
- 400: Faserverbundgelegeherstellungsvorrichtung
- 410: Kern
- 420: Gelegehalbzeug
- A: Verfahrensschritt
- B: Verfahrensschritt
- C: Verfahrensschritt
- D: Verfahrensschritt
- H: Hub des Messers
- HZR: Halbzeugdrehrichtung
- KR: Kerndrehrichtung
- R: Bewegungsrichtung Messer
- V: Vorschubrichtung Trennvorrichtung
- Z1, Z1': erster Zahnspitzenabstand
- Z2: zweiter Zahnspitzenabstand

## Patentansprüche

1. Verfahren zum Trennen eines trockenen Faserverbundgeleges mit einer Vielzahl übereinander angeordneter Gelegelagen, umfassend
- Bereitstellen des trockenen Faserverbundgeleges und einer Trennvorrichtung,
- Trennen des trockenen Faserverbundgeleges mit der Trennvorrichtung, welche ein Trennelement mit einer Verzahnung umfasst, wobei die Verzahnung ein Wellenprofil mit einer Mehrzahl von Zähnen aufweist,
- wobei das Trennen ein im Wesentlichen translatorisches Bewegen der Verzahnung am und/oder im trockenen Faserverbundgelege mit einem Hub umfasst, der größer ist als ein Zahnspitzenabstand von zwei benachbarten Zähnen der Verzahnung, **dadurch gekennzeichnet, dass**
die Verzahnung ein Wellenprofil mit einer Mehrzahl von Zähnen aufweist, so dass ein Zahn teilweise oder vollständig die Geometrie eines halben Kreises oder einer halben Ellipse aufweist.

2. Verfahren gemäß dem vorhergehenden Anspruch, umfassend wobei das Bereitstellen eines Faserverbundgeleges das Bereitstellen eines durch Fasergelegewickeln erzeugten Faserverbundgeleges, vorzugsweise eines rotationssymmetrischen Faserverbundgeleges, umfasst, und wobei dieses Faserverbundgelege so an mindestens einer, vorzugsweise zwei oder mehreren Trennstellen derart getrennt wird, dass ein, zwei oder mehrere nicht rotationssymmetrische Faserverbundgelegeteile entstehen.

3. Verfahren gemäß mindestens einem der vorhergehenden Ansprüche, wobei das Trennelement als Sägeblatt bereitgestellt wird.

4. Verfahren gemäß mindestens einem der vorhergehenden Ansprüche, wobei der Hub die 1,5- bis 20-fache Abmessung des Zahnspitzenabstands, insbesondere die 2- bis 5-fache Abmessung des Zahnspitzenabstands und/oder die 15-bis 20-fache Abmessung des Zahnspitzenabstands, aufweist.

5. Verfahren gemäß mindestens einem der vorhergehenden Ansprüche,umfassend Bereitstellen einer Trennvorrichtung mit einem elektrischen und/oder pneumatischen und/oder hydraulischen Antrieb.

6. Verfahren gemäß mindestens einem der vorhergehenden Ansprüche, wobei die Trennvorrichtung als Stoßmessermaschine bereitgestellt wird.

7. Verfahren gemäß mindestens einem der vorhergehenden Ansprüche, wobei die Trennvorrichtung eine Niederhaltevorrichtung umfasst.

8. Verfahren gemäß mindestens einem der vorhergehenden Ansprüche, wobei das Trennelement eine Trennelementführung umfasst, die das Trennelement im Wesentlichen in seiner translatorischen Richtung führt, und/oder wobei die Trennelementführung eine Fluidzuführungsvorrichtung umfasst.

9. Verfahren gemäß mindestens einem der vorhergehenden Ansprüche, wobei das Faserverbundgelege aus Glasfasern besteht oder Glasfasern umfasst.

10. Verfahren gemäß mindestens einem der vorhergehenden Ansprüche, wobei das Faserverbundgelege eine Höhe in Richtung des Hubs aufweist und diese Höhe 30 mm oder größer, beispielsweise 50 mm oder größer, insbesondere 75mm oder größer, vorzugsweise 90mm oder größer, ist.

11. Verfahren gemäß mindestens einem der vorhergehenden Ansprüche, wobei die Verzahnung einen konstanten Zahnspitzenabstand aufweist, und/oder die Verzahnung einen Zahnspitzenabstand zwischen 0,5 mm und 2,5 mm, vorzugsweise zwischen 0,8 mm und 2 mm, insbesondere zwischen 1 mm und 1,5 mm, aufweist.

12. Verfahren gemäß mindestens einem der vorhergehenden Ansprüche, wobei die Verzahnung einen variierenden und/oder einen alternierenden Zahnspitzenabstand aufweist.

13. Verfahren gemäß mindestens einem der vorhergehenden Ansprüche, wobei das Trennen an einer Kante des Faserverbundgeleges und/oder von einem Loch in dem Faserverbundgelege aus beginnt.

## Claims

1. A method for separating a dry fiber composite fabric with a multiplicity of fabric layers arranged one on top of the other, comprising
- providing the dry fiber composite fabric and a separating device,
- separating the dry fiber composite fabric with the separating device, which comprises a separating element with a toothing, wherein the toothing has a wave profile with a plurality of teeth,
- wherein the separating comprises a substantially translational movement of the toothing on and/or in the dry fiber composite fabric with a stroke that is greater than a tooth tip spacing of two adjacent teeth of the toothing,
**characterised in that** the toothing has a wave profile with a plurality of teeth, so that a tooth has partially or completely the geometry of a half-circle or a half-ellipse.

2. The method as claimed in the preceding claim, comprising
wherein the provision of a fiber composite fabric comprises the provision of a fiber composite fabric created by fiber fabric winding, preferably a rotationally symmetrical fiber composite fabric, and wherein this fiber composite fabric is separated at at least one, preferably two or more, separating locations in such a way that one, two or more fiber composite fabric parts that are not rotationally symmetrical are created.

3. The method as claimed in at least one of the preceding claims,
wherein the separating element is provided as a saw blade.

4. The method as claimed in at least one of the preceding claims,
wherein the stroke is of a size equivalent to 1.5 to 20 times the tooth tip spacing, in particular of a size equivalent to 2 to 5 times the tooth tip spacing and/or of a size equivalent to 15 to 20 times the tooth tip spacing.

5. The method as claimed in at least one of the preceding claims, comprising providing a separating device having an electrical and/or pneumatic and/or hydraulic drive.

6. The method as claimed in at least one of the preceding claims,
wherein the separating device is provided as a straight knife cutting machine.

7. The method as claimed in at least one of the preceding claims,
wherein the separating device comprises a holding-down device.

8. The method as claimed in at least one of the preceding claims,
wherein the separating element comprises a separating element guide, which guides the separating element substantially in its translational direction, and/or wherein the separating element guide comprises a fluid feeding device.

9. The method as claimed in at least one of the preceding claims,
wherein the fiber composite fabric consists of glass fibers or comprises glass fibers.

10. The method as claimed in at least one of the preceding claims,
wherein the fiber composite fabric has a height in the direction of the stroke and this height is 30 mm or greater, for example 50 mm or greater, in particular 75 mm or greater, preferably 90 mm or greater.

11. The method as claimed in at least one of the preceding claims,
wherein the toothing has a constant tooth tip spacing, and/or
the toothing has a tooth tip spacing of between 0.5 mm and 2.5 mm, preferably between 0.8 mm and 2 mm, in particular between 1 mm and 1.5 mm.

12. The method as claimed in at least one of the preceding claims,
wherein the toothing has a varying and/or an alternating tooth tip spacing.

13. The method as claimed in at least one of the preceding claims,
wherein the separating begins at an edge of the fiber composite fabric and/or from a hole in the fiber composite fabric.

## Revendications

1. Procédé de séparation d'une nappe composite de fibres sèche avec une pluralité de couches de nappe agencées les unes au-dessus des autres, comprenant
- la fourniture de la nappe composite de fibres sèche et d'un dispositif de séparation,
- la séparation de la nappe composite de fibres sèche avec le dispositif de séparation qui comporte un élément de séparation avec une denture, dans lequel la denture présente un profil ondulé avec une pluralité de dents,
- dans lequel la séparation comporte un déplacement sensiblement translatoire de la denture au niveau de et/ou dans la nappe composite de fibres sèche avec une course qui est supérieure à une distance de pointe de dent de deux dents contigües de la denture, **caractérisé en ce que** la denture présente un profilé ondulé avec une pluralité de dents de sorte qu'une dent présente partiellement ou complètement la géométrie d'un demi-cercle ou d'une demi-ellipse.

2. Procédé selon la revendication précédente, comprenant
dans lequel la fourniture d'une nappe composite de fibres comporte la fourniture d'une nappe composite de fibres générée par des enroulements de nappe de fibres, de préférence d'une nappe composite de fibres symétrique en rotation, et dans lequel cette nappe composite de fibres est séparée au niveau d'au moins un, de préférence deux ou plusieurs points de séparation de telle manière qu'une, deux ou plusieurs parties de nappe composite de fibres non symétriques en rotation apparaissent.

3. Procédé selon au moins l'une des revendications précédentes, dans lequel l'élément de séparation est fourni comme lame de scie.

4. Procédé selon au moins l'une des revendications précédentes, dans lequel la course présente 1,5 à 20 fois la dimension de la distance de pointe de dent, en particulier 2 à 5 fois la dimension de la distance de pointe de dent et/ou 15 à 20 fois la dimension de la distance de pointe de dent.

5. Procédé selon au moins l'une des revendications précédentes, comprenant la fourniture d'un dispositif de séparation avec un entraînement électrique et/ou pneumatique et/ou hydraulique.

6. Procédé selon au moins l'une des revendications précédentes, dans lequel le dispositif de séparation est fourni comme machine à rabot à couper le velours.

7. Procédé selon au moins l'une des revendications précédentes, dans lequel le dispositif de séparation comporte un dispositif de retenue.

8. Procédé selon au moins l'une des revendications précédentes, dans lequel l'élément de séparation comporte un guidage d'élément de séparation qui mène l'élément de séparation sensiblement dans son sens translatoire, et/ou dans lequel le guidage d'élément de séparation comporte un dispositif d'amenée de fluide.

9. Procédé selon au moins l'une des revendications précédentes, dans lequel la nappe composite de fibres se compose de fibres de verre ou comporte des fibres de verre.

10. Procédé selon au moins l'une des revendications précédentes, dans lequel la nappe composite de fibres présente une hauteur en direction de la course et cette hauteur est de 30 mm ou plus, par exemple de 50 mm ou plus, en particulier de 75 mm ou plus, de préférence de 90 mm ou plus.

11. Procédé selon au moins l'une des revendications précédentes, dans lequel la denture présente une distance de pointe de dent constante, et/ou la denture présente une distance de pointe de dent entre 0,5 mm et 2,5 mm, de préférence entre 0,8 mm et 2 mm, en particulier entre 1 mm et 1,5 mm.

12. Procédé selon au moins l'une des revendications précédentes, dans lequel la denture présente une distance de pointe de dent variable et/ou alternative.

13. Procédé selon au moins l'une des revendications précédentes, dans lequel la séparation commence au niveau d'une arête de la nappe composite de fibres et/ou depuis un trou dans la nappe composite de fibres.
